# EUROPEAN PATENT SPECIFICATION

(11) **EP 2 620 255 B1**
(45) Date of publication and mention of the grant of the patent: **20.08.2014**
(21) Application number: 13150107.4
(22) Date of filing: 03.01.2013
(51) Int. Cl.: B23Q 11/00, B23Q 17/24, B23Q 11/08

(54) **Machine tool**
Maschinenwerkzeug
Machine-outil

(30) Priority: 27.01.2012 JP 2012014760
(43) Date of publication of application: 31.07.2013
(73) Proprietor: STAR MICRONICS CO., LTD., Suruga-ku, Shizuoka-shi, Shizuoka 422-8654 (JP)
(72) Inventor: Kurihara, Shigeyuki, Shizuoka-shi, Shizuoka 422-8654 (JP)
(74) Representative: Böck, Bernhard

(56) References cited:
- DE-U1- 29 806 591
- JP-A- 2010 052 056
- US-A- 2 740 037
- US-A1- 2010 085 730

## Description

### BACKGROUND

The present invention relates to a machine tool.

A precision part is manufactured, for example, by exerting some machining on a workpiece with using a machine tool such as a numerical control lathe (NC lathe). A machining unit including a main spindle and a tool post is accommodated in a machining chamber formed by a housing. In general, the housing is provided with a movable protection guard (door) to open and close the machining chamber. While this guard is opened, the operation of the machining unit is forcibly prohibited by the interlock function of a driving apparatus such as a main spindle, servo feed system, hydraulic equipment, and pneumatic equipment to secure the safety of an operator.

On the other hand, the operator wants to observe the machining unit and the workpiece during machining with the guard opened (refer Japanese Patent Publication No. 2010-052056). Accordingly, an enabling switch (also called as a dead man switch) has been used in combination with the interlock function to enable the operator to stop the driving apparatus at emergency. This sort of switch has been embodied as a separate momentary switch of a handgrip type, which is connected to the machine body by a cable, or as a momentary switch of a push button type provided on an operation panel of the machine.

Such a separate enabling switch connected to the machine body via a cable, however, would increase the cost and occupy a space at the front of the machining chamber, thereby likely disturbing the operator.

Such a enabling switch provided on the operation panel would reduce the work efficiency since it would be difficult for the operator to operate the distant switch while observing the machining unit in the machining chamber.

### SUMMARY OF THE INVENTION

In considering foregoing, it is an object of the present invention to provide a machine tool of improved work efficiency.

To accomplish the object, an embodiment of the present invention provides a machine tool according to appended claim 1.

The operator wants to cancel the restriction or prohibition of the operation of the machining unit in such case as he observes the workpiece during machining or makes arrangement for the replacement of tools in the machining chamber. Since the momentary switch is mounted on the lighting apparatus for illuminating the machining unit, the operator is able to cancel at least part of the restriction or prohibition without operating a distant momentary switch away from the machining chamber. Further, since the momentary switch is not necessarily provided on the housing at the front of the machining chamber, the operator is not disturbed, thereby improving the work efficiency.

The lighting apparatus is configured to be movable, so that light can be focused on a desired portion of the machining unit, thereby the lighting apparatus may be downsized or of less power consumption.

The predetermined interlock conditions include (A) the guard is opened, which is a preferable condition, (B) a predetermined operation mode is selected, and (C) the guard is opened or a predetermined operation mode is selected (a combination of aforementioned conditions). The aforementioned condition (A) includes a case that the guard remains opened (not closed) and further a case that the opened guard is closed but cancellation of the interlock function is not operated.

The interlock system may prohibit or restrict the operation of the machining unit in whole. The interlock system also may prohibit or restrict the operation of the machining unit in part while permitting the rest.

The cancelation system may cancel the restriction or prohibition imposed by the interlock system in whole. The cancelation system also may cancel the restriction or prohibition in part while maintaining the rest.

The cancelation system may cancel at least part of the restriction or prohibition imposed by the interlock system by an operation of the momentary switch when at least one of such conditions is met as the door is opened and a predetermined operation mode is selected. This cancelation condition meets the operator's need. The embodiment would therefore provide a suitable machine tool configured to cancel the restriction or prohibition on the operation of the machining unit.

The cancelation system may cancel at least part of the restriction or prohibition imposed by the interlock system by an operation of the momentary switch when the lighting apparatus is on. If the machining unit is illuminated to be made brighter and more visible, work efficiency would be improved in such case as the operator observes the workpiece during machining or makes arrangements for replacement of tools in the machining chamber. Permitting the enabling function only when the lighting apparatus is on is thus advantageous. The embodiment would therefore provide a suitable machine tool configured to cancel the restriction or prohibition on the operation of the machining unit.

The momentary switch may be mounted on the lighting apparatus away from the activation button by a distance. The distance is set to be far enough to prevent the operator from operating the activation button with the hand operating the momentary switch.

Because of the foregoing configuration, the operator is required to use both hands to simultaneously operate the momentary switch and the activation button. In other words, the operator is not able to operate the activation button with the same hand operating the momentary switch. Accordingly, it is prevented that the momentary switch and the activation button are operated with one hand with the other hand placed inside the machining chamber. Therefore, the present embodiment secures high safety.

Further, a method invention having a corresponding process to the aforementioned means, a computer program invention embodying a corresponding function to the aforementioned means with a computer or etc. may generate the same effect as described foregoing.

According to an embodiment of the present invention, a machine tool of improved work efficiency can be provided.

### BRIEF DESCRIPTION OF THE DRAWINGS

FIG. 1 is a front view of a NC lathe (machine tool) 1 according to an exemplary embodiment of the present invention.
FIG. 2 is a front view of a lighting apparatus 150 according to an exemplary embodiment of the present invention.
FIGs 3A, 3B and 3C are circuit diagrams of NC lathes according to exemplary embodiments of the present invention.
FIG. 4 is a side view of a NC lathe 1 according to an exemplary embodiment of the present invention.
FIG. 5 is a block diagram illustrating electrical connection of a NC lathe 1 according to an exemplary embodiment of the present invention.
FIG. 6 is a partial view illustrating principal parts of a NC lathe 1 according to an exemplary embodiment of the present invention.
FIG. 7 is a flow chart illustrating processes executed by a NC apparatus 10 according to an exemplary embodiment of the present invention.
FIG. 8 is a partial view illustrating principal parts of a NC lathe 1 according to an exemplary embodiment of the present invention.

### DETAILED DESCRIPTION OF THE EMBODIMENTS

Hereinafter, embodiments of the present invention will be described with reference to the accompanying drawings.

In the drawings, the size and relative sizes of layers, films, panels, regions, etc., may be exaggerated for clarity. Like reference numerals in the drawings denote like elements.

### (1) Configuration of a machine tool:

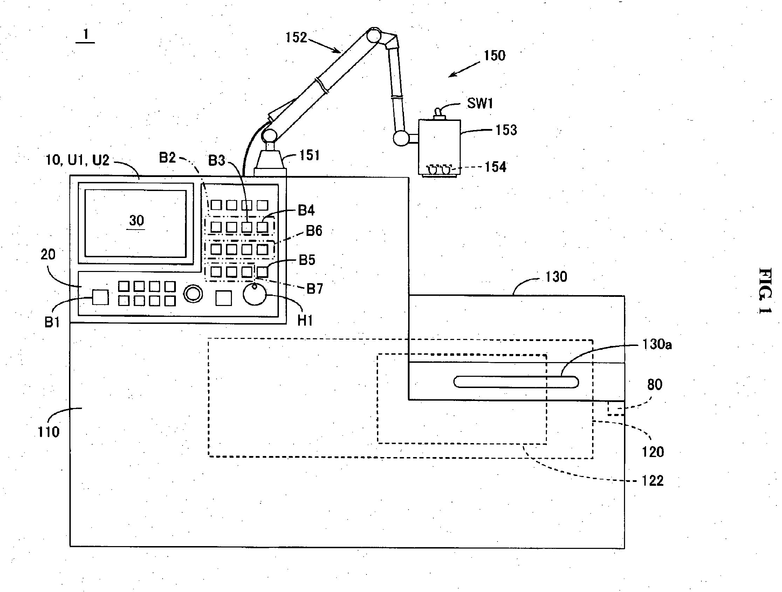

FIGs 1-8 illustrate a NC lathe 1 that employs concept of a machine tool according to the present invention. FIG. 1 is a front view of the NC lathe 1 according to an exemplary embodiment of the present invention, having a NC apparatus 10 installed at a predetermined place. The NC apparatus 10, which is a computer having a operation panel 20 and a display 3, numerically controls operation of a machining unit 122. The NC apparatus 10 has an interlock system U1, which restricts or prohibits the operation of the machining unit 122 when an interlock condition is met. Further, the NC apparatus 10 has a cancelation system U2, which cancels at least part of the restriction or prohibition imposed by the interlock system U1 by an operation of a momentary switch (an enabling switch SW1, SW2).

The NC lathe 1 is entirely covered by a housing 110. A machining chamber 120 is formed inside the housing 110. The housing 110 is provided with a movable protection guard (door) 130, which is adapted to open and close an upper part of the machining chamber 120. In FIG. 1, the machining chamber 120 is closed by the guard 130. The closed guard 130 looks like a box covering a part of the NC lathe 1 from the top. The guard 130 is provided with a hand grip 130a.

In addition, if the guard 130 is provided with an observation window, the operator is able to perform operations while observing the inside of the machining chamber through the window..

The machining chamber 120 accommodates the machining unit 122 for machining a workpiece W1. A lighting apparatus 150 to illuminate the machining unit 122 is installed on the NC lathe 1.

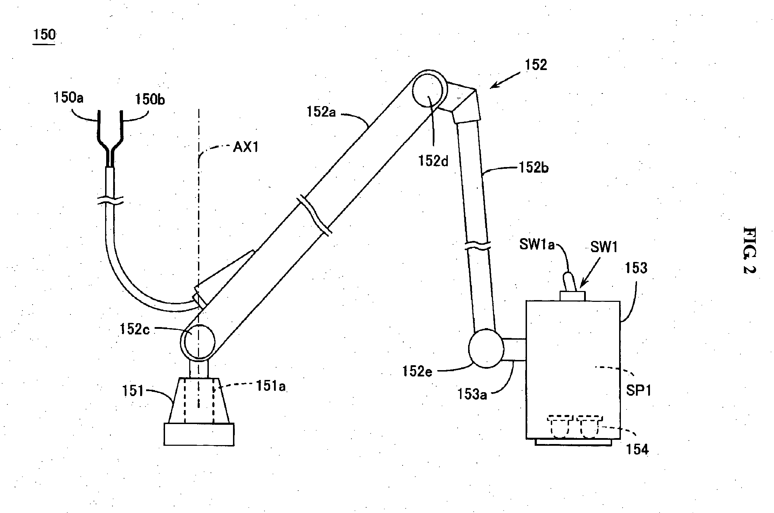

FIG. 2 is a front view of the lighting apparatus 150 according to an exemplary embodiment of the present invention. The lighting apparatus 150 may be of an arm type comprising a fixing part 151, an arm part 152, a head part 153, and a lamp (light source) 154. The lighting apparatus 150 of an arm type not only provides installation convenience but flexibly adjusts the lightning direction so as to improve the visibility of the particular machining area. Further, the lightning apparatus is provided with an enabling switch (momentary switch) SW1. A momentary switch is kept at a momentary position (ON position) only while pushed by the operator and returned to an initial position (OFF position) when released. The enabling switch enables the operator to promptly stop a driving apparatus (the machining unit 122) at emergency when the interlock function is not activated.

The enabling switch may be of a separate hand grip type connected to the machine body by a cable, or of a push button type mounted on the operation panel. Such configuration, however, would increase the cost and reduce the operating efficiency since a space at the front of the machining chamber is occupied. To resolve these demerits, the enabling switch SW1 may be mounted on the lighting apparatus 150.

The fixing part 151 has a rotation mechanism 151a that swivels (substantially horizontally rotates) the arm part 152 around a rotation axis AX1, which is approximately vertical. FIG. 1 illustrates the fixing part 151 attached to the top surface of the NC apparatus 10. The arm part 152 has longish arms 152a and 152b and joints 152c, 152d, and 152e. An end of the first arm 152a is connected to the fixing part 151 with the first joint 152c interposed therebetween. The first joint 152c enables the first arm 152a to tilt in a predetermined direction with the horizontal angle determined by the rotation mechanism 151a. An end of the second arm 152b is connected to the other end of the first arm 152a with the second joint 152d interposed therebetween. The second joint 152d enables the second arm 152b to tilt in a predetermined direction with the horizontal angle determined by the rotation mechanism 151a. The head part 153 is connected to the other end of the second arm 152b with the third joint 152e interposed therebetween. The third joint 152e enables the head part 153 to tilt in a predetermined direction with the horizontal angle determined by the rotation mechanism 151a. The head part 153 is adapted to rotate with respect to a center axis of the shaft 153a. Therefore, the head part 153 is adapted to be manually handled by the operator to change the lighting direction of the lamp 154 in three-dimension.

The head part 153 constitutes a housing having a space SP1 to accommodate the lamp 154. FIG. 2 shows the head part 153 having a substantially cylindrical exterior shape with an end (front face) thereof constituting a light emitting portion of the lamp 154. FIG. 2 shows the lamp 154 including a plurality of white LEDs (light emitting diodes) respectively having a shape of a bomb. Instead, the lamp 154 may be made up of a single light source or a surface mounting type LED. The lamp 154 may emit a colored light other than a white light. The lamp 154 may be a light bulb, a fluorescent light lamp or etc.

FIG. 2 shows the enabling switch SW1 mounted on a rear face of the head part 153. The enabling switch SW1 has a finger grip SW1a for tilting operation. The enabling switch SW1 may be either a separate switch or a common switch with regard to a lamp switch (on-off switch) for the lamp 154. The enabling switch SW1 may be mounted on any part of the lighting apparatus 150 including the side face of the head part 153, the arm 152a or 152b of the arm part 152, and the fixing part 151.

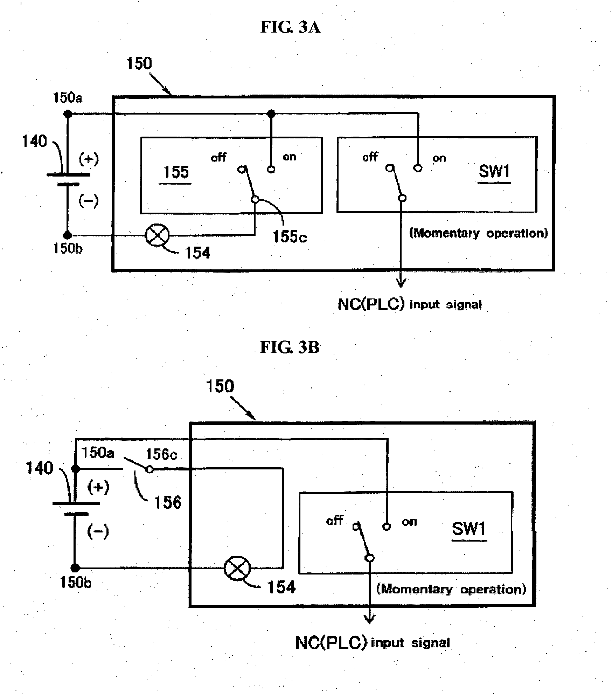

As illustrated in FIGs 3A to 3C, a power terminal 150a is connected to a plus terminal of a power source 140 of the NC lathe 1 at a place outside of the lighting apparatus 150. A power terminal 150b is connected to a minus terminal of the power source 140.

FIG 3A is a circuit diagram illustrating a lamp switch 155 and the enabling switch SW1 according to an exemplary embodiment of the present invention, which are separately mounted on the lighting apparatus 150 (for example, on the head part 153). The lamp switch 155 is an alternate switch having one pole and two positions (ON and OFF). An input terminal of the ON position is electrically connected to the power terminal 150a connected to the plus terminal of the power source 140. An input terminal of the OFF position is electrically opened. An output terminal 155c of the lamp switch 155 is connected to an anode of the lamp 154. A cathode of the lamp 154 is connected to the power terminal 150b connected to the minus terminal of the power source 140. Accordingly, when the lamp switch 155 is turned to the ON position, the lamp 154 is turned on and when the lamp switch 155 is turned to the OFF position, the lamp 154 is turned off.

The enabling switch SW1 is a momentary switch having one pole and two positions. The enabling switch SW1 is operated between the ON position and the OFF position by tilting the finger grip SW1a. An input terminal of the ON position is electrically connected to the power terminal 150a connected to the plus terminal of the power source 140. An input terminal of the OFF position is electrically opened. An NC (PLC) input signal from the output terminal of the enabling switch SW1 is inputted to the NC apparatus 10. Accordingly, when the enabling switch SW1 is turned to the ON position, a high-level signal (a current flowing state) is transmitted to the NC apparatus 10 regardless of the status of the lamp 154. When the enabling switch SW1 is automatically returned to the OFF position, an open signal is transmitted to the NC apparatus 10.

FIG 3B is a circuit diagram, according to an exemplary embodiment of the present invention, illustrating the enabling switch SW1 mounted on the lighting apparatus 150 (for example, on the head part 153) and a relay 156 provided outside of the lighting apparatus 150. The relay 156 is, for example, operated to be turned on and off according to a pressing operation of a light button B5 provided on the operation panel 20. A contact point of the relay 156 is closed when an ON command is issued and is opened when an OFF command is issued. An input terminal of the relay 156 is electrically connected to the power terminal 150a connected to the plus terminal of the power source 140. An output terminal 156c of the relay 156 is connected to the anode of the lamp 154. Accordingly, when the relay 156 is turned to the ON position, the lamp 154 is turned on and when the relay 156 is turned to the OFF position, the lamp 154 is turned off. The enabling switch SW1 of FIG. 3B has the same configuration as the enabling switch SW1 of FIG. 3A

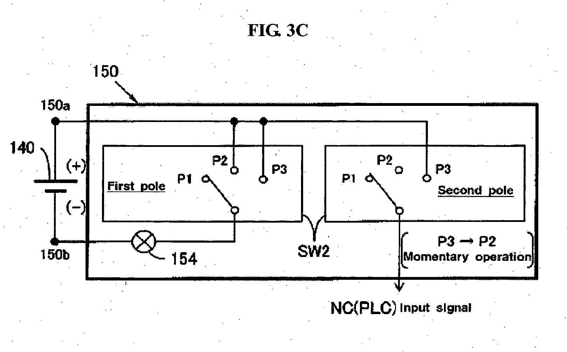

FIG 3C is a circuit diagram illustrating an exemplary embodiment of the enabling switch SW2 having two poles and three positions, which is mounted on the lighting apparatus 150 (for example, on the head part 153). The enabling switch SW2 is operated as a momentary switch between a position P3 and a position P2 by tilting a finger grip and as an alternate switch between a position P1 and the position P2. The input terminal of the position P1 of the first pole is electrically opened. The positions P2 and P3 of the first pole are electrically connected to the power terminal 150a connected to the plus terminal of the power source 140. An output terminal of the first pole is connected to the anode of the lamp 154.

The positions P1 and P2 of the second pole are electrically opened. The input terminal of the position P3 of the second pole is electrically connected to the power terminal 150a connected to the plus terminal of the power source 140. Accordingly, when the enabling switch SW2 is turned to the position P1, the lamp 154 is turned off and an open signal is applied to the NC apparatus 10. When the enabling switch SW2 is turned to the position P2, the lamp 154 is turned on but an open signal is still applied to the NC apparatus 10. When the enabling switch SW2 is turned to the position P3, the lamp 154 remains on and a high-level signal (a current flowing state) is applied to the NC apparatus 10. When the enabling switch SW2 is automatically returned to the position P2, the lamp 154 remains on and an open signal is applied to the NC apparatus 10.

The momentary switch may have three poles or more. When the lighting apparatus is turned on and off by a pressing operation of the light button provided on the operation panel, all input terminals of one of the poles may be connected to the power source and the output terminal thereof may be connected to the lamp. In this case, if the ON command is issued from the NC apparatus, the lamp is always turned on. This embodiment would be effective in such case as a separate terminal block is not provided.

In addition, the momentary switch may have four positions or more.

According to the present embodiment, when the lighting apparatus 150 is on, at least part of the restriction or prohibition imposed by the interlock system U1 is canceled by an operation of the enabling switch SW2. If the machining unit 122 is illuminated to be made brighter and more visible, work efficiency would be improved in such case as the operator observes the workpiece W1 during machining or makes arrangements for replacement of tools in the machining chamber. Permitting the enabling function only when the lighting apparatus 150 is on is thus advantageous. Accordingly, the present embodiment is suitable for canceling the restriction or prohibition of the machining unit 122. Further, since the on-off switch of the lighting apparatus is used in common with the cancellation switch of the interlock function, there is no need to provide a separate momentary switch for canceling the interlock function.

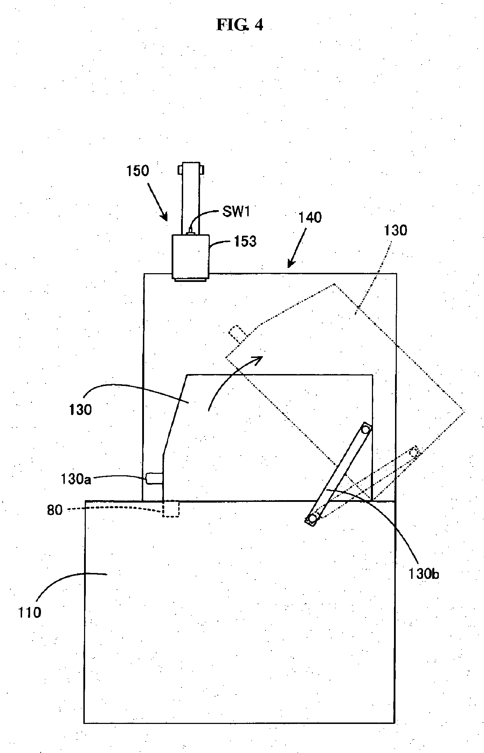

FIG. 4 is a side view of the NC lathe 1 according to an exemplary embodiment of the present invention. FIG. 4 illustrates a state that the guard 130 is opened as illustrated by a two dot chain line. A connection member 130b shown in FIG. 4 connects the guard 130 and the housing 110. The connection member 130b is extendable with one end thereof pivotally mounted on the side surface of the guard 130 and the other end thereof on the side surface of the housing 110.

The closed guard 130 can be opened by pulling up the hand grip 130a toward the upper-back side, resulting in the open state as illustrated by the two dot chain line. A switch for opening and closing the guard 130 may be provided on the NC lathe 1 near the guard 130 so that the guard 130 may be automatically opened and closed by operating the switch. When the guard 130 is opened, it would be possible for the operator to closely observe the machining unit 122 in the machining chamber 120 or directly approach the machining unit 122 for adjustment. There may be various shapes of the guard 130 and various opening methods thereof. For example, the guard 130 may be embodied as a sliding door that horizontally slides to open and close a portion of the housing 110.

FIG. 1 shows the operation panel 20 having a plurality of buttons and keys such as an activation button B1 and mode selection buttons B2. The operation panel 20 may include a touch panel on the display 30. The activation button B1 is operable to receive an activation command of the machining unit 122 (and to start activation thereof). When the activation button B 1 is pressed, numerically controlled machining is started on the workpiece W1 by the machining unit 122. The operation mode started by the activation button B1 is called an "automatic mode".

The mode selection buttons B2 are operable to make the NC lathe 1 into a "non-automatic mode". The NC lathe 1 is only allowed to be operated with some restrictions in the "non-automatic mode" including a manual mode and a semiautomatic mode. The mode selection buttons B2 may include at least one of a jog button B3 and a handwheel feed button B4. The jog button B3 is operable to select a jog mode, which is one of the manual modes. When the jog button B3 is pressed, feed buttons B6 become operable to receive an input. In this situation, when at least one of the feed buttons B6 is pressed, a selected member of the machining unit 122 is moved to a selected direction until the feed button B6 is released. The feed buttons B6 includes a "+Z" button for moving a headstock 45 toward the "+Z" direction, a "-Z "button for moving the headstock 45 toward the "-Z" direction, and a "+X" button for moving a tool post 44 toward the "+X" direction. The handwheel feed button B4 is operable to select a handwheel feed mode, which is one of the manual modes. When the handwheel feed button B4 is pressed , axis selection buttons B7 become operable to receive an input. In this situation, when one of the axis selection buttons B7 is pressed, a selected member of the machining unit 122 is moved in accordance with the rotating operation of a handwheel H1. The axis selection buttons B7 include a Z-axis button to move the headstock 45 in the Z-axis direction and an X-axis button to move the tool post 44 in the X-axis direction. When the handwheel H1 is rotated in one direction (for example, clock wise direction), the selected member of the machining unit 122 is moved toward the "+" (plus) direction and when the handwheel H1 is rotated in the other direction (for example, counter clock wise direction), the selected member of the machining unit 122 is moved toward the "-" (minus) direction. The jog button B3 and the handwheel feed button B4 are operable to make the NC lathe 1 into the manual mode.

The display 30 has a display panel displaying a plurality of contents such as various settings inputted by the operator and various information with regard to the NC lathe 1. The contents to be displayed are controlled by the NC apparatus 10.

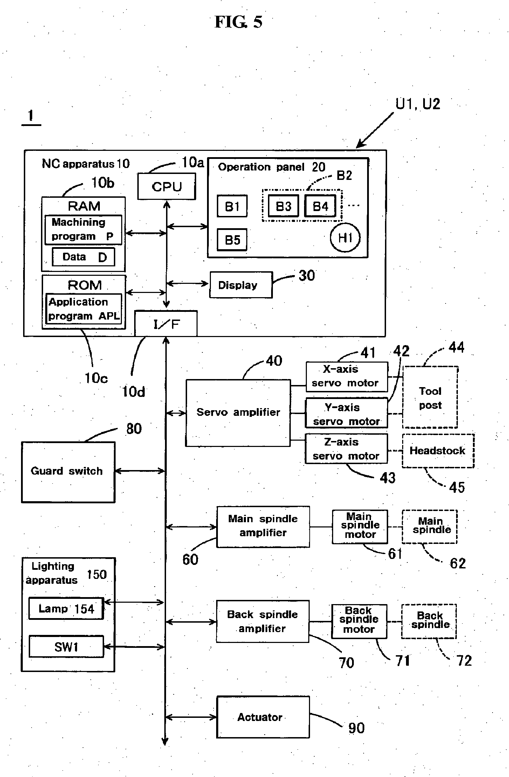

FIG. 5 is a block diagram illustrating an electrical connection of the NC lathe 1 according to an exemplary embodiment of the present invention. The NC apparatus 10 is a computer comprising a CPU (Central Processing Unit) 10a, a RAM (Random Access Memory) 10b, a ROM (Read Only Memory) 10c, an interface (I/F) 10d for the machine mechanism, the operation panel 20 and the display 30. The RAM 10b stores a machining program P and data D. The ROM 10c stores an application program (APL). The CPU 10a numerically controls the machine mechanism in accordance with the program P and the application program APL.

The I/F 10d is connected to the machine mechanism including a servo amplifier 40, a main spindle amplifier 60, a back spindle amplifier 70, a guard switch (door switch) 80, a various sort of actuator 90, the lamp 154, and the enabling switch SW1

The servo amplifier 40 supplies electric power to an X-axis servo motor 41, a Y-axis servo motor 42, and a Z-axis servo motor 43, which are connected to the servo amplifier 40. The X-axis servo motor 41 and the Y-axis servo motor 42 convert the supplied electric power to mechanical power, thereby moving the tool post 44 connected thereto in the X-axis direction and Y-axis direction respectively. The Z-axis servo motor 43 converts the supplied electric power to mechanical power, thereby moving the headstock 45 connected thereto in the Z-axis direction.

The main spindle amplifier 60 supplies electric power to a main spindle motor 61 connected thereto. The main spindle motor 61 converts the supplied electric power to rotational power, thereby rotating a main spindle 62 connected thereto. The main spindle 62 is mounted on the headstock 45.

The back spindle amplifier 70 supplies electric power to a back spindle motor 71. The back spindle motor 71 converts the supplied electric power to rotational power, thereby rotating a back spindle 72 connected thereto. The back spindle 72 is mounted on a backworking attachment 53.

The guard switch 80 detects whether the guard 130 is opened and transmits a detection signal corresponding to the status of the guard 130 to the NC apparatus 10. The guard switch 80 in FIG. 1 is mounted on an inner side surface of the housing 110. The guard switch 80 may generate a closed state signal representing the contact state when the guard 130 is detected to be completely closed. The guard switch 80 may generate an opened state signal representing the non-contact state when the guard 130 is detected to be opened even if only slightly. Detection may be executed by use of a non-contacting sensor or based on the positional information of the guard 130.

The actuator 90 includes a mechanical power device for opening and closing a collet (chucking member) provided on the main spindle 62 or the back spindle 72 .

The NC apparatus 10, when the actuation button B1 is detected to be pressed, drives the machining unit 122 to machine the workpiece W1 in accordance with the processing program P. The numerical control is performed, for example, according to the various numerical data D stored in the RAM 10B.

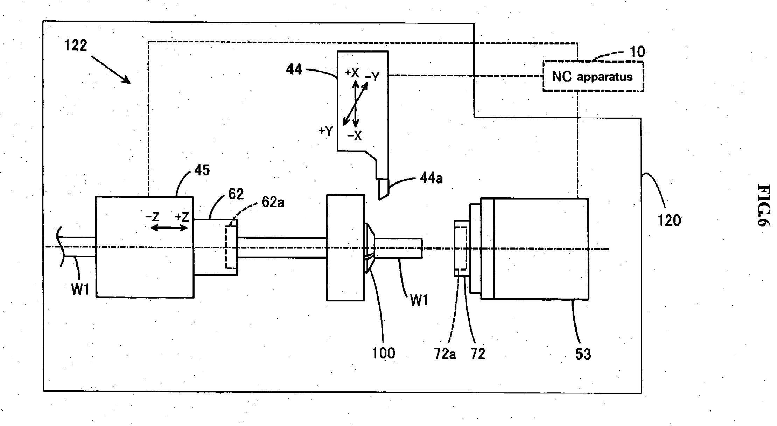

FIG. 6 illustrates the internal configuration of the NC lathe 1, mainly the machining unit 122 in the machining chamber 120. The machining unit 122 includes the headstock 45 on which the main spindle 62 is mounted, the backworking attachment 53 on which the back spindle 72 is mounted, a guide bush (GB) 100, and the tool post 44 on which a tool 44a is mounted.

Here, the axis of the main spindle 62 and the back spindle 72 is the Z-axis direction, which is the left and right direction in FIG. 6. The X-axis direction, which is perpendicular to the Z-axis direction, is the upper and lower direction in FIG. 6. The Y-axis direction, which is perpendicular to the Z-axis direction and the X-axis direction, is the perpendicular direction to the paper plane of FIG. 6.

The headstock 45 is adapted to be moved in the axis direction of the main spindle 62 (the Z-axis direction) along with the main spindle 62, which is mounted on a predetermined height of the headstock 45. The main spindle 62, at the front end thereof, has a collet 62a releasably chucking a long bar material (the workpiece W1), which is supplied from the rear side (the left side in FIG. 6) of the main spindle 62. Hereinafter, the plus (+) direction of the Z-axis (the right direction in FIG. 6) is called the forward direction.

The GB 100 has a center through-hole, in which the workpiece W1 chucked by the collet 62a and protruding from the main spindle 62 toward the forward direction is inserted. The GB 100 slidably supports the workpiece W1 so that the workpiece W1 may slide in the Z-axis direction. The GB 100, with the workpiece W1 inserted therethrough, is rotatable with respect to the same rotation axis as the main spindle 62.

The tool 44a for machining the protruded workpiece W1 is mounted on the tool post 44, which is arranged above the GB 100. The tool post 44 may accommodate a plurality of tools either simultaneously or in an exchangeable way. The tools include a turning tool for front machining and a cut-off tool. The tool post 44 is movable in the X-axis direction and Y-axis direction along with the tool 44a.

The backworking attachment 53, which is disposed opposite to the headstock 45 with the GB 100 arranged therebetween, is movable in the axis direction of the back spindle 72 (the Z-axis direction) along with the back spindle 72, which is mounted on a predetermined height of the backworking attachment 53. The back spindle 72 , at the front end thereof, has a collet 72a releasably chucking the workpiece W1. Further, another tool post which accommodates tools for machining the rear face of the workpiece W1 gripped by the back spindle 72, may be provided near the backworking attachment 53.

The configuration of the machining unit 122 and the moving direction thereof are not limited to the forgoing.

### (2) Cancelation of the interlock:

The interlock function causes inconvenience for the operator as the case may be. The NC apparatus 10 according to an embodiment of the present invention exceptionally allows the operator to cancel the interlock function to activate the machining unit 122 when a predetermined canceling condition is met, even if a predetermined interlock condition has been met (for example, even if the guard 130 remains opened).

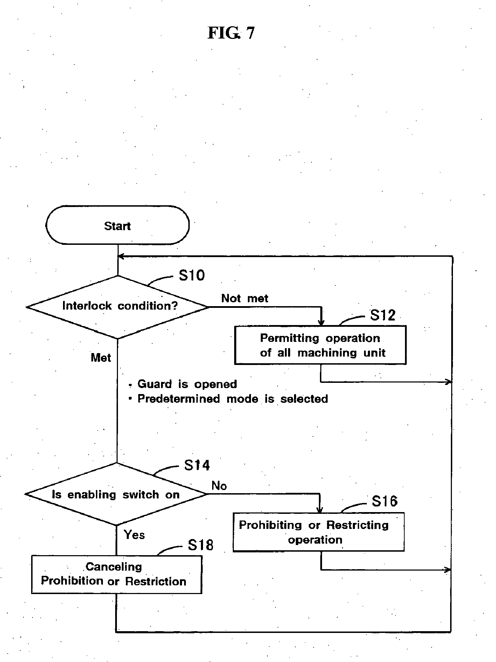

FIG. 7 is a flow chart illustrating an interlock cancelation process executed by the NC apparatus 10 (CPU 10a) according to the application program APL. This process is executed in parallel with other processes (such as machining in accordance with the processing program P) in a multitasking environment when the NC lathe 1 is powered on. The interlock cancelation may be executed in whole or in part by the machining program P. The NC apparatus 10 executing steps S10 and S16 constitutes the interlock system U1. The NC apparatus 10 executing steps S14 and S18 constitutes the cancelation system U2.

At the beginning of the process, it is determined whether any of predetermined interlock conditions is met (Step S10). The predetermined interlock conditions include (A) the guard 130 is opened, which is a preferable condition, (B) a "non-automatic mode" (a predetermined operation mode) is selected, and (C) the guard 130 is opened or a "non-automatic mode" is selected (a combination of aforementioned conditions). The aforementioned condition (A) includes not only a case that the guard 130 remains opened (not closed) but a case that the opened guard 130 is closed and cancellation of the interlock function is not operated on the operation panel 20. The interlock condition may be met when the lamp 154 (the lighting apparatus 150) is on.
(A) In the case that the interlock condition is met when the guard 130 is opened, the NC apparatus 10 may read the detection signal of the guard switch 80 and proceed to the next step according to the status of the detection signal. When the detection signal shows the non-contact state (opened state), the interlock condition is determined to be met. The process then proceeds to Step S 14. When the detection signal shows the contact state (closed state), the interlock condition is determined not to be met. The process then proceeds to S 12.
   When the interlock condition is met when the opened guard 130 is closed but the activation button B 1 is not pressed, the process may proceed to the next step according to the combination of the status of the detection signal and the activation button B 1. When the detection signal shows the non-contact state (opened state) or when the detection signal is changed from the non-contact state to the contact sate but the activation button B 1 is not pressed, the process proceeds to S14. When the detection signal is changed from the non-contact state to the contact sate and the activation button B1 is pressed, the process proceeds to S12.
(B) In the case that the interlock condition is met when a manual mode (non-automatic mode) is selected, the process may proceed to the next step according to the status of the mode selection button B2. When the mode selection button B2 is pressed, the process proceeds to S 14. When the mode selection button B2 is not pressed, the process proceeds to S 12.
(C) In the case that the interlock condition is met when the combination of the aforementioned conditions are met, the process may proceed to the next step according to the status of the detection signal of the guard switch 80 and the status of the mode selection button B2. When the detection signal of the guard 130 shows the non-contact state or the mode selection button B2 is pressed, the process proceeds to S14. When the detection signal of the guard 130 shows the contact state and the mode selection button B2 is not pressed, the process proceeds to S 12.

When the interlock condition is not met, every member of the machining unit 122 in the machining chamber 120 is permitted to be activated (S12) and the process returns to S10. A normal operation flag may be set ON representing that the operation of the machining unit 122 is permitted. When the activation button B 1 is pressed, the machining unit 122 is started to be activated in accordance with the processing program P if the normal operation flag is detected ON. Further, when machining is stopped in whole or in part by the interlock function, machining is restarted if the normal operation flag is detected ON. Then, machining of the workpiece W1 is executed.

At step S14, it is determined whether the enabling switch is operated (whether the momentary switch is kept pushed by the operator). In the embodiment of FIGs 3A to 3C, the NC apparatus 10 reads the status of the NC (PLC) input signal from the enabling switch (SW1, SW2), and proceeds to the next step according to the status of the NC (PLC) input signal. When the NC (PLC) input signal is at the high level (current flowing state), the cancelation condition is determined to be met and the process proceeds to S 18. When the NC (PLC) input signal is in the open state, the cancelation condition is determined not to be met and the process proceeds to S16.

When the cancelation condition is not met in S 14, the operation of the machining unit 122 is restricted or prohibited and the process returns to S10. When the interlock condition is met (for example, the guard is opened or a manual mode is selected) and the enabling switch is not pressed, the operation of the machining unit 122 is restricted or prohibited for the operator's safety.

For example, an operation prohibition flag may be set ON representing that any operation of the machining unit 122 is prohibited. Machining is not started even when the activation button B1 is pressed if the operation prohibition flag is detected ON. Ongoing machining is stopped if the operation prohibition flag is detected ON during machining. Further, suspended machining is not restarted if the prohibition flag is set ON immediately after the suspension. In a case that the guard 130 is detected opened (the interlock condition is met), the interlock function is applied to the machining unit 122 in whole as long as the guard 130 remained opened and the enabling switch (SW1, SW2) is not operated,.

At S16, the operation of the machining unit 122 may be permitted under a predetermined restriction rather than completely prohibited. The predetermined restriction includes speed limits on each member of the machining unit 122, which are predetermined for the operator's safety. These speed limits may include limits on the moving speed of the headstock 45, the backworking attachment 53, or the tool post 44. For example, when the guard 130 is opened and the enabling switch SW1, SW2 is not operated, the member of the machining unit 122 is permitted to move only under the predetermined limit. Such restriction on the machining unit 122 may include a partial permission of the operation rather than the prohibition in whole.

When the enabling switch (SW1, SW2) is operated (while the momentary switch is kept pushed) at S 14, at least part of the restriction or prohibition imposed by the interlock system U1 is canceled and the process returns to S10. In other word, when the interlock condition is met (for example, the guard is opened or a manual mode is selected) and the enabling switch is operated, at least part of the restriction or prohibition imposed by the interlock system U1 is canceled.

For example, a guard-open operation flag may be set ON, representing that the operation of the machining unit 122 is permitted while the guard 130 is opened. When the activation button B1 is pressed, the member of the machining unit 122 is activated in accordance with the machining program P if the guard-open operation flag is detected ON likewise when the normal operation flag is ON. Ongoing machining is continued if the guard-open operation flag is detected ON during machining.

At S 18, the interlock function may be canceled under a predetermined restriction rather than complete cancelation. For example, the speed of the machining unit 122 may be limited to be slower in the operation under the guard-open operation flag than in the operation under the normal operation flag. In addition, such restriction on cancelation may include a partial prohibition of the operation of the machining unit 122 rather than a permission of the operation in whole.

### (3) Function and effect:

The operator wants to cancel the restriction or prohibition on the operation of the machining unit 122 in such case as he observes the workpiece W1 during machining or makes arrangements for replacement of tools in the machining chamber. The separate enabling switch of a hand grip type, which is connected to the machine body by a cable, would increase the cost and occupy a space at the front of the machining chamber, thereby likely disturbing the operator. The enabling switch of a momentary push button type provided on the operation panel would reduce the work efficiency since it would be difficult for the operator to operate the distant switch while observing the machining unit in the machining chamber.

According to the present invention, since the momentary switch SW1, SW2 is mounted on the head (153) of the lighting apparatus 150 illuminating the machining unit 122, the interlock function can be canceled without requiring a separate enabling switch. The operator may cancel at least part of the interlock function by operating the finger grip SW1a of the nearby enabling switch rather than a distant switch away from the machining chamber. Further, the enabling switch is not necessarily provided on the housing at the front of the machining chamber, thereby improving the work efficiency.

Further, when the on-off switch for the lighting apparatus is used in common with the cancelation switch for the interlock function, a separate momentary switch for canceling the interlock function would be eliminated and the machine cost would be reduced.

### (4) Modified embodiments:

The present invention may have various modifications.

For example, the present invention may be applied to various machine tools, such as a grinder, a gear cutting machine, and etc. other than the lathe.

In FIG. 3A, the input terminal of the ON position of the enabling switch SW1 may be connected to the output terminal 155c of the lamp switch 155 instead of being connected to the power terminal 150a. In addition, in FIG. 3B, the input terminal of the ON position of the enabling switch SW1 may be connected to the output terminal 156c of the relay 156 instead of being connected to the power terminal 150a. In any case, when the lamp 154 is off, the interlock function is not canceled by the operation of the enabling switch SW1. The interlock function is canceled by the operation of the enabling switch SW1 only when the lamp 154 is on. As discussed above, if the machining unit 122 is illuminated to be made brighter and more visible, work efficiency would be further improved in such case as the operator observes the workpiece W1 during machining or makes arrangement for the replacement of tools in the machining chamber. Accordingly, these modifications of the embodiments are suitable for canceling the restriction and prohibition on the machining unit 122.

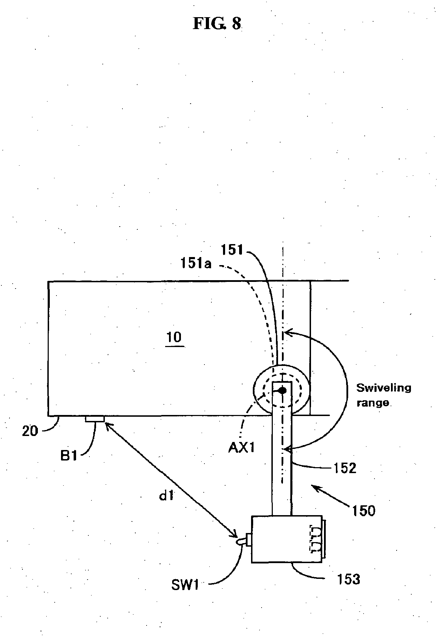

As shown in FIG. 8, the enabling switch SW1 may be mounted on the lighting apparatus 150 away from the activation button B1 by a distance d1. The distance d1 is set to be far enough to prevent the operator from operating the activation button B 1 with the hand operating the enabling switch SW1. FIG. 8 shows the rotation mechanism 151 a which is adapted to swivel the arm part 152 in a range of 180 degrees on the side of the guard 130. The enabling switch SW1 mounted on the head part 153 most closely approaches the activation button B1 mounted on the operation panel when the arm part 152 is swiveled to the front so that the enabling switch SW1 faces the activation button. Even in this arrangement, there is the distance d1 kept between the enabling switch SW1 and the activation button B1, preventing the enabling switch SW1 and the activation button B1 from being operated by one hand. The distance d1 may be equal to or more than 260mm.

Because of the foregoing configuration, the operator is required to use both hands to simultaneously operate the enabling switch SW1 and the activation button B 1. In other words, the operator is not able to operate the activation button B1 with the same hand operating the enabling switch SW1. Accordingly, it is prevented that the enabling switch SW1 and the activation button B1 are operated with one hand with the other hand placed inside the machining chamber. Therefore, the present embodiment secures high safety.

The distance d1 between the enabling switch SW1 and the activation button B1 may be provided by the following methods instead of restricting the swiveling range (rotation angle) of the arm part 152:
- Adjusting the length of the arm part.
- Adjusting the length of each arm part if a plurality of arm parts are joined.
- Restricting rotation angle of the head part.

It will be apparent to those skilled in the art that various modifications and variations can be made in the present invention without departing from the scope of the appended claims.

## Claims

1. A machine tool comprising:
a housing (110) configured to accommodate a machining unit (122) for machining a workpiece (W1);
a lighting apparatus (150) configured to illuminate the machining unit (122);
an interlock system (U1) configured to impose a restriction or prohibition on the operation of the machining unit (122) when an interlock condition is met; and
a cancelation system (U2) configured to cancel at least part of the restriction or prohibition imposed by the interlock system (U1) by an operation of a momentary switch (SW1)
**characterized in that**,
the lighting apparatus (150) is configured to have an arm (152) with a joint and a head (153) supported by the arm (152) and configured to be provided at the exterior of the housing (110) and
the momentary switch (SW1) is mounted on the head (153) of the lighting apparatus (150).

2. The machine tool of claim 1, wherein
the housing (110) is provided with a door (130) configured to be opened and closed, and
the cancelation system (U2) cancels at least part of the restriction or prohibition imposed by the interlock system (U1) by an operation of the momentary switch (SW1) when at least one of such conditions is met as the door (130) is opened and a predetermined operation mode is selected.

3. The machine tool of claim 1 or claim 2, wherein
the cancelation system (U2) cancels at least part of the restriction or prohibition imposed by the interlock system (U1) by an operation of the momentary switch (SW1) when the lighting apparatus (150) is on.

4. The machine tool of any of claims 1 to 3, wherein the momentary switch (SW1) mounted on the lighting apparatus (150) is separated from an activation button (B1) for activating the machining unit (122) by at least such distance as preventing the momentary switch (SW1) and the activation button (B1) from being operated with one hand.

## Patentansprüche

1. Werkzeugmaschine, umfassend:
ein Gehäuse (110), das so konfiguriert ist, dass es eine Bearbeitungseinheit (122) zum Bearbeiten eines Werkstücks (W1) aufnimmt;
eine Beleuchtungsvorrichtung (150), die so konfiguriert ist, dass sie die Bearbeitungseinheit (122) beleuchtet;
ein Blockiersystem (U1), das so konfiguriert ist, dass es der Betätigung der Bearbeitungseinheit (122) eine Beschränkung oder Sperre auferlegt, wenn eine Blockierbedingung erfüllt ist; und
ein Rücknahmesystem (U2), das so konfiguriert ist, dass es zumindest einen Teil der durch das Blockiersystem (U1) auferlegten Beschränkung oder Sperre durch eine Betätigung eines Tastschalters (SW1) zurücknimmt,
**dadurch gekennzeichnet,**
**dass** die Beleuchtungsvorrichtung (150) so konfiguriert ist, dass sie einen Arm (152) mit einem Gelenk und einem Kopf (153), der durch den Arm (152) gestützt ist, aufweist, und so konfiguriert ist, dass sie an der Außenseite des Gehäuses (110) vorgesehen ist, und
**dass** der Tastschalter (SW1) an dem Kopf (153) der Beleuchtungsvorrichtung (150) angebracht ist.

2. Werkzeugmaschine nach Anspruch 1, wobei
das Gehäuse (110) mit einer Tür (130) versehen ist, die so konfiguriert ist, dass sie geöffnet und geschlossen werden kann, und
das Rücknahmesystem (U2) zumindest einen Teil der durch das Blockiersystem (U1) auferlegten Beschränkung oder Sperre durch eine Betätigung des Tastschalters (SW1) zurücknimmt, wenn zumindest eine der Bedingungen erfüllt ist, dass die Tür (130) geöffnet wird und ein vorbestimmter Betriebsmodus ausgewählt wird.

3. Werkzeugmaschine nach Anspruch 1 oder Anspruch 2, wobei das Rücknahmesystem (U2) zumindest einen Teil der durch das Blockiersystem (U1) auferlegten Beschränkung oder Sperre durch eine Betätigung des Tastschalters (SW1) zurücknimmt, wenn die Beleuchtungsvorrichtung (150) eingeschaltet ist.

4. Werkzeugmaschine nach einem der Ansprüche 1 bis 3, wobei der an der Beleuchtungsvorrichtung (150) angebrachte Tastschalter (SW1) zumindest in einem solchen Abstand getrennt von einem Aktivierungsknopf (B1) zum Aktivieren der Bearbeitungseinheit (122) angebracht ist, dass verhindert wird, dass der Tastschalter (SW1) und der Aktivierungsknopf (B1) mit einer Hand betätigt werden können.

## Revendications

1. Machine-outil comprenant:
un boîtier (110) configuré pour recevoir une unité (122) d'usinage pour usiner une pièce (W1) à fabriquer;
un appareil (150) d'illumination configuré pour illuminer l'unité (122) d'usinage;
un système (U1) de blocage configuré pour imposer une restriction ou une prohibition à l'opération de l'unité (122) d'usinage quand une condition de blocage est remplie; et
un système (U2) d'annulation configuré pour annuler au moins une partie de la restriction ou de la prohibition imposées par le système (U1) de blocage par un actionnement d'un commutateur (SW1) à action fugitive,
**caractérisée en ce que**
l'appareil (150) d'illumination est configuré pour présenter un bras (152) avec un joint et une tête (153) supportée par le bras (152) et configuré pour être prévu à l'extérieur du boîtier (110) et
le commutateur (SW1) à action fugitive est monté sur la tête (153) de l'appareil (150) d'illumination.

2. Machine-outil selon la revendication 1, dans lequel
le boîtier (110) est pourvu d'une porte (130) configurée pour être ouverte et fermée, et
le système (U2) d'annulation annule au moins une partie de la restriction ou de la prohibition imposées par le système (U1) de blocage par un actionnement du commutateur (SW1) à action fugitive quand au moins une de telles conditions est remplie que la porte (130) soit ouverte et un mode d'opération prédéterminé soit choisi.

3. Machine-outil selon la revendication 1 ou la revendication 2, dans lequel
le système (U2) d'annulation annule au moins une partie de la restriction ou de la prohibition imposées par le système (U1) de blocage par un actionnement du commutateur (SW1) à action fugitive quand l'appareil (150) d'illumination est allumé.

4. Machine-outil selon l'une quelconque des revendications 1 à 3, dans
lequel le commutateur (SW1) à action fugitive monté sur l'appareil (150) d'illumination est séparé d'un bouton (B1) d'activation pour activer l'unité (122) d'usinage d'au moins une telle distance qui empêche que le commutateur (SW1) à action fugitive et le bouton (B1) d'activation soient actionnés d'une seule main.
